# EUROPEAN PATENT SPECIFICATION

(11) **EP 3 151 525 B1**
(45) Date of publication and mention of the grant of the patent: **22.09.2021**
(21) Application number: 15815373.4
(22) Date of filing: 02.03.2015
(51) Int. Cl.: H04M 1/725, H04B 7/08

(54) **MOBILE TERMINAL ANTENNA CONTROLLING METHOD AND MOBILE TERMINAL**
STEUERUNGSVERFAHREN FÜR ANTENNE EINES MOBILEN ENDGERÄTS SOWIE MOBILES ENDGERÄT
PROCÉDÉ DE COMMANDE D'ANTENNE DE TERMINAL MOBILE ET TERMINAL MOBILE

(30) Priority: 30.06.2014 CN 201410307645
(43) Date of publication of application: 05.04.2017
(73) Proprietor: Huawei Technologies Co., Ltd., Shenzhen, Guangdong 518129 (CN)
(72) Inventor: YU, Rongdao, Shenzhen Guangdong 518129 (CN); HUANG, Maosheng, Shenzhen Guangdong 518129 (CN); LIANG, Hua, Shenzhen Guangdong 518129 (CN); HUO, Dawei, Shenzhen Guangdong 518129 (CN)
(74) Representative: Thun, Clemens
(86) International application number: PCT/CN2015/073496
(87) International publication number: WO 2016/000460

(56) References cited:
- WO-A2-2011/111988
- CN-A- 1 832 371
- CN-A- 102 546 083
- CN-A- 103 974 340
- CN-A- 104 038 990
- CN-A- 104 144 515
- CN-A- 104 219 377
- US-A1- 2006 084 395
- US-A1- 2009 295 648
- US-A1- 2013 121 249
- US-A1- 2013 156 080
- None

## Description

### TECHNICAL FIELD

Embodiments of the present invention relate to the field of communications technologies, and in particular, to a control method for a mobile terminal antenna, and a mobile terminal.

### BACKGROUND

In 2G and 3G technologies, one antenna is configured for a mobile terminal, while in 4G LTE (Long Term Evolution), two antennas are configured for a mobile terminal. Further, in LTE-Advanced, as many as four antennas may be configured for a mobile terminal. With development and evolution of communications technologies, eight or even more antennas, for example, 12 antennas or 16 antennas, may be configured for a mobile terminal in the future. In an MIMO (Multiple Input Multiple Output, Multiple Input Multiple Output) technology, an increase in a quantity of antennas of a mobile terminal may improve a transmission capacity and a transmission rate. However, more antennas also increase calculation complexity of communication between the terminal and a communications network element, further leading to higher power consumption.

For example, US 2009/0295648A1 refers to an antenna diversity system for portable electronic devices. Further, the antenna diversity system is provided for portable electronic devices that have wireless communications circuitry and environment sensors. The wireless communications circuitry may include multiple redundant antennas that operate in one or more overlapping radio-frequency communications bands. The environment sensors and redundant antennas may be used in implementing an antenna diversity system. For example, an electronic device may use environment sensors to select an antenna for use in handling wireless communications. The electronic devices may monitor the wireless performance of an active antenna. When the wireless performance of the active antenna degrades, the electronic devices may select a new antenna for wireless communications using the antenna diversity system and environment sensors. Antenna selection may also be made based on which features are being used in the electronic device.

Further, US 2006/0084395A1 refers to a mobile communication device being operable to automatically optimize the best antenna or antenna combination in reaction to the device's immediate environment. The individual antenna designs can be optimized to provide high antenna system efficiency for a number of likely device environments.

Further, CN 1832371A refers to a diversity receiver comprises: (n) ((n) is a natural number of ≥2) receiving units for producing data from radio signals received from (n) antennas; an antenna selecting unit for determining selection/non-selection of each of the antennas based on predetermined conditions; a selective combining unit for selectively combining data corresponding to a selected antenna; and a control unit for performing at least either control for initiating a receiving unit corresponding to an antenna to be newly selected and starting the selective combination in the selective combining unit in a predetermined order, or control for stopping a receiving unit corresponding to an antenna to be newly non-selected and stopping the selective combination in the selective combining unit in a predetermined order.

Specifically, some tasks, services, or the like that are executed on the mobile terminal do not need participation of many antennas, for example, only two antennas need to be enabled to normally execute a session service. In this case, if four antennas on the mobile terminal are enabled, it causes excessively high power consumption of the mobile terminal. Especially, in the case of the mobile terminal, which is an electronic device that relies on a battery for power supply, enabling an unnecessary antenna wastes electricity of the battery, and affects use by a user.

### SUMMARY

Embodiments of the present invention provide a control method for a mobile terminal antenna, and a mobile terminal, which are used to properly control a quantity of disabled or enabled antennas of the mobile terminal. This problem is solved by independent claims 1 and 2.

The following aspects are not presented as embodiments of the invention but as examples useful for understanding the invention.

By means of the control method for a mobile terminal antenna and the mobile terminal that are provided in the embodiments of the present invention, when a start command or relevant information of a service is received, a quantity of antennas that the mobile terminal should enable is determined, and a quantity of enabled antennas on the mobile terminal is flexibly changed, thereby preventing that the quantity of enabled antennas on the mobile terminal cannot meet a requirement for executing the service, and also preventing that the quantity of enabled antennas on the mobile terminal is excessive, which causes unnecessary energy loss; moreover, it can further prevent the quantity of enabled antennas on the mobile terminal from causing harmful impact on surroundings, or consuming electricity of the mobile terminal excessively fast and affecting performance of the mobile terminal.

### BRIEF DESCRIPTION OF DRAWINGS

FIG. 1 is a schematic diagram of an application scenario according to an embodiment of the present invention;
FIG. 2 is a flowchart of Embodiment 1 of a control method for a mobile terminal antenna according to the present invention;
FIG. 3 is a flowchart of Embodiment 2 of a control method for a mobile terminal antenna according to the present invention;
FIG. 4 is a flowchart of Embodiment 3 of a control method for a mobile terminal antenna according to the present invention;
FIG. 5 is a flowchart of Embodiment 4 of a control method for a mobile terminal antenna according to the present invention;
FIG. 6 is a flowchart of Embodiment 5 of a control method for a mobile terminal antenna according to the present invention;
FIG. 7 is a flowchart of Embodiment 6 of a control method for a mobile terminal antenna according to the present invention;
FIG. 8 is a flowchart of Embodiment 7 of a control method for a mobile terminal antenna according to the present invention;
FIG. 9 is a structural diagram of Embodiment 1 of a mobile terminal according to the present invention;
FIG. 10 is a structural diagram of Embodiment 2 of a mobile terminal according to the present invention;
FIG. 11 is a structural diagram of Embodiment 3 of a mobile terminal according to the present invention; and
FIG. 12 is a structural diagram of Embodiment 4 of a mobile terminal according to the present invention.

### DESCRIPTION OF EMBODIMENTS

To make the objectives, technical solutions, and advantages of the embodiments of the present invention clearer, the following clearly describes the technical solutions in the embodiments of the present invention with reference to the accompanying drawings in the embodiments of the present invention. Apparently, the described embodiments are some but not all of the embodiments of the present invention. All other embodiments obtained by a person of ordinary skill in the art based on the embodiments of the present invention without creative efforts shall fall within the protection scope of the present invention.

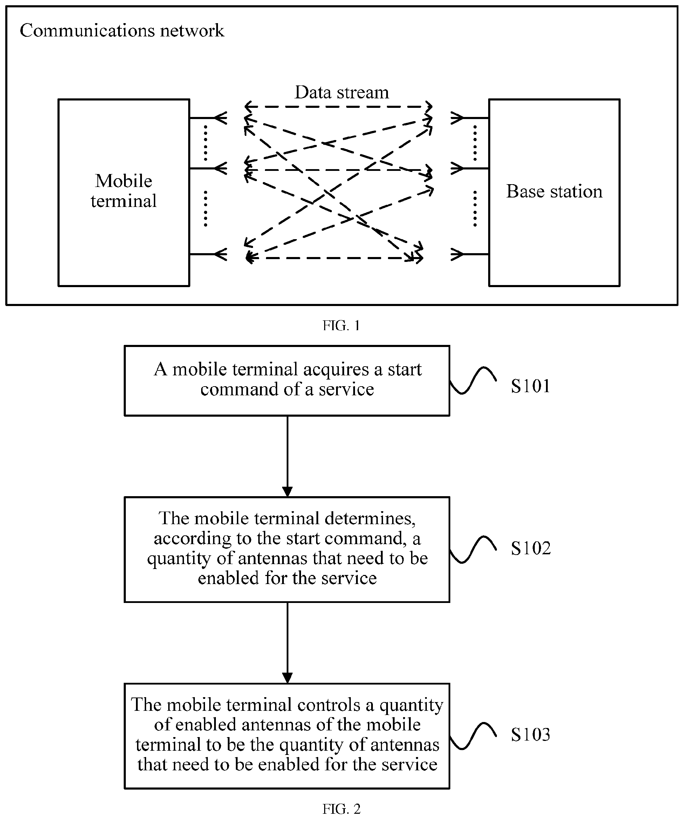

FIG. 1 is a schematic diagram of an application scenario according to an embodiment of the present invention. As shown in FIG. 1, this embodiment is applied to a communications network on which technologies such as 4G LTE, LTE-Advanced, and MIMO are used, and a quantity of antennas that are generally disposed on a mobile terminal (such as a mobile phone or a tablet) is at least 2. Accordingly, multiple antennas are set on a network element (such as a base station) that provides a communications service for the mobile terminal. For example, N antennas are disposed on the mobile terminal, where N is a positive integer not less than 2, and M antennas are disposed on the base station, where M is a positive integer not less than 2, and in this case, the mobile terminal on the communications network can communicate, by using the N antennas, with the M antennas of the base station, to transmit a data stream. It may be understood that, when the mobile terminal executes some services, service requirements can be met by enabling only one antenna; although to use multiple antennas can improve communications performance by some degree, multiple antennas participating in communication increases complexity of the communication, causes high power consumption of the mobile terminal, and brings inconvenience to a user when the user uses the mobile terminal, or in some cases, the mobile terminal enables multiple antennas, and therefore causes excessive radiation to people or devices near the mobile terminal. Therefore, the mobile terminal needs to properly control a quantity of enabled antennas on the mobile terminal, and a specific control manner is as follows:
FIG. 2 is a flowchart of Embodiment 1 of a control method for a mobile terminal antenna according to the present invention. As shown in FIG. 2, reference may be made to FIG. 1, and this embodiment is executed by a mobile terminal, where the mobile terminal is specifically a mobile phone, a tablet, or the like. The control method specifically includes:
S101: A mobile terminal acquires a start command of a service.

The start command may be a service signal of the service, for example, if a user using a mobile terminal has subscribed to a video push service, a video server periodically sends video content to the mobile terminal; and in this case, when the mobile terminal receives a video stream signal, the video stream signal is a service signal used as the start command.

Alternatively, the start command may be an operation instruction entered by a user, where the operation instruction is used to instruct the mobile terminal to execute the service, for example, if the user taps a "Radio" icon on a display of the mobile terminal, the start command of the service received by the mobile terminal is an operation instruction "start a radio service".

S102: The mobile terminal determines, according to the start command, a quantity of antennas that need to be enabled for the service.

The mobile terminal learns about, according to the start command, a specific service to be executed at present, and thereby can determine a quantity of antennas that are needed by the service to be started. For example, the mobile terminal enables 4 antennas at a current moment, but at this time, an incoming call paging message is received, and in this case, the mobile terminal determines that the service to be executed is a session service; the mobile terminal determines, according to settings of a network or a capability of the mobile terminal, that 1 (when the mobile terminal is on a 2G network) or 2 (when the mobile terminal is on an LTE network) antennas need to be enabled to meet a requirement of the session service; and then unnecessary enabled antennas may be disabled, that is, the following S103 is further performed.

S103: The mobile terminal controls a quantity of enabled antennas of the mobile terminal to be the quantity of antennas that need to be enabled for the service.

It should be additionally noted that, when or after S103 is performed, the mobile terminal begins to execute the service, and subsequently, when the mobile terminal receives information for terminating the service, the mobile terminal terminates the service, and controls the quantity of enabled antennas of the mobile terminal to revert to a quantity before the start command is received.

In this embodiment, a mobile terminal determines, according to a received start command of a service, a quantity of antennas that need to be enabled for the service, and flexibly changes a quantity of enabled antennas on the mobile terminal, thereby preventing that the quantity of enabled antennas on the mobile terminal cannot meet a requirement for executing the service, and also preventing that the quantity of enabled antennas on the mobile terminal is excessive, which causes unnecessary energy loss and affects performance of the mobile terminal.

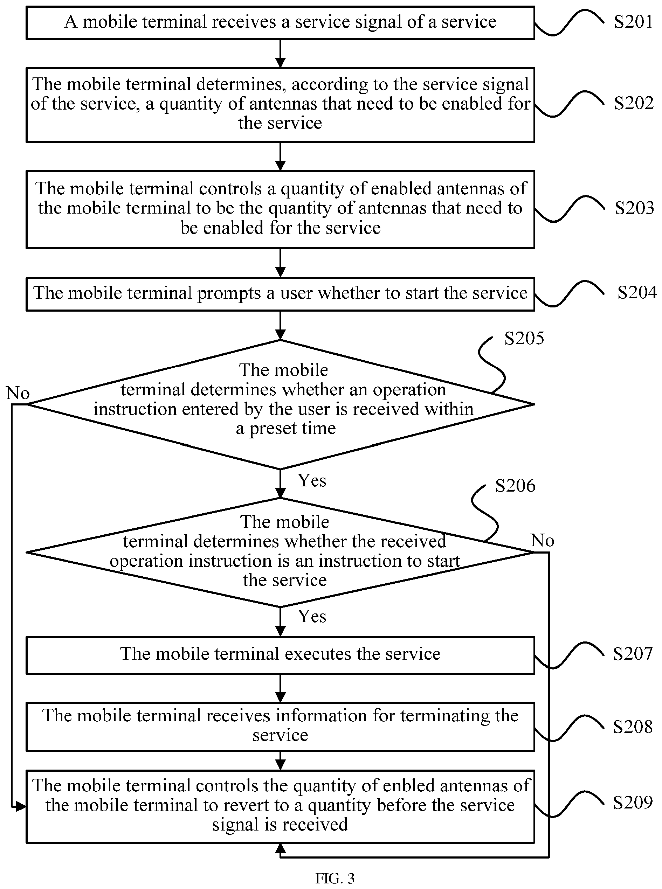

FIG. 3 is a flowchart of Embodiment 2 of a control method for a mobile terminal antenna according to the present invention. As shown in FIG. 3, in this embodiment, a start command of a service is a service signal of the service, and in this case, a specific process is as follows:
S201: A mobile terminal receives a service signal of a service.
S202: The mobile terminal determines, according to the service signal of the service, a quantity of antennas that need to be enabled for the service.

Description is made by using an example in which an incoming call paging message in a session service is used as the service signal. When the mobile terminal receives the incoming call paging message, the mobile terminal learns that the session service is about to be executed, and currently the mobile terminal camps on a 2G network; in this case, the mobile terminal can meet a requirement of the session service by enabling only 1 antenna, and therefore, the mobile terminal determines, by using S202, to enable 1 antenna; and if the mobile terminal camps on an LTE network, and corresponding to the LTE network, the mobile terminal can meet the requirement of the session service by enabling only 2 antennas, and therefore, the mobile terminal determines, by using S202, to enable 2 antennas.

S203: The mobile terminal controls a quantity of enabled antennas of the mobile terminal to be the quantity of antennas that need to be enabled for the service.

For example, the mobile terminal enables 4 antennas at a current moment, but determines, by using S202, that the quantity of antennas that need to be enabled is 2, and then in S203, the mobile terminal disables 2 antennas, to retain 2 enabled antennas.

It may be understood that, if the service signal is a video stream signal sent by a video server to the mobile terminal according to a push service that the mobile terminal subscribes to, the mobile terminal enables, by using S201 to S203, antennas needed by a video service, and then the mobile terminal directly receives and plays a video stream, that is, directly executes the service; and the following S204 to S209 may not be performed. However, to improve user experience, the mobile terminal prompts a user whether to start the service; for example, if the service signal is an incoming call paging message, the mobile terminal displays options such as "Answer" and "Reject" on a display, to prompting the user whether to start the session service, that is, in this embodiment, the following S204 to S209 still need to be performed:
S204: The mobile terminal prompts a user whether to start the service.
S205: The mobile terminal determines whether an operation instruction entered by the user is received within a preset time, and if yes, performs S206; or if not, performs S209.

The user puts a mobile phone in a handbag and is not aware that there is a call, or the user is not near the mobile terminal and cannot enter an operation instruction in time, but the mobile terminal cannot wait all along for the user to enter the operation instruction; therefore, the mobile terminal needs to determine whether the operation instruction is received within the preset time.

S206: The mobile terminal determines whether the received operation instruction is an instruction to start the service, and if yes, performs S207; or if not, performs S209.

Options such as "Answer" and "Reject" are displayed on a display of the mobile terminal. If the user taps "Answer", the mobile terminal determines that the user enters the operation instruction to start the service; or if the user taps "Reject", the mobile terminal determines that the user enters an operation instruction not used for starting the service, that is, the session service is ended before being started, and therefore, S209 is performed.

S207: The mobile terminal executes the service.

S208: The mobile terminal receives information for terminating the service.

For example, the mobile terminal receives a last piece of video data in the video stream, and then the video service is ended; or the user taps a "Hand up" option when terminating a call, and then the session service is ended.

S209: The mobile terminal controls the quantity of enabled antennas of the mobile terminal to revert to a quantity before the service signal is received.

In S205, when the mobile terminal determines that an operation instruction entered by the user is not received within the preset time, it may be considered as that the service is ended before being executed; in S206, when the mobile terminal determines that the received operation instruction is an instruction not used for starting the service, it may also be considered that the service is ended before being executed; and in S208, the mobile terminal receives the information for terminating the service. Therefore, when the mobile terminal determines that an operation instruction entered by the user is not received within the preset time, or when the mobile terminal determines that the received operation instruction is an instruction not used for starting the service, or after the mobile terminal begins to execute the service, the mobile terminal receives the information for terminating the service, in S209, it may be considered that the mobile terminal terminates the service, and controls the quantity of enabled antennas of the mobile terminal to revert to the quantity before the service signal is received.

In this embodiment, a mobile terminal determines, according to a received start command of a service, a quantity of antennas that need to be enabled for the service, and flexibly changes a quantity of enabled antennas on the mobile terminal, thereby preventing that the quantity of enabled antennas on the mobile terminal cannot meet a requirement for executing the service, and also preventing that the quantity of enabled antennas on the mobile terminal is excessive, which causes unnecessary energy loss and affects performance of the mobile terminal.

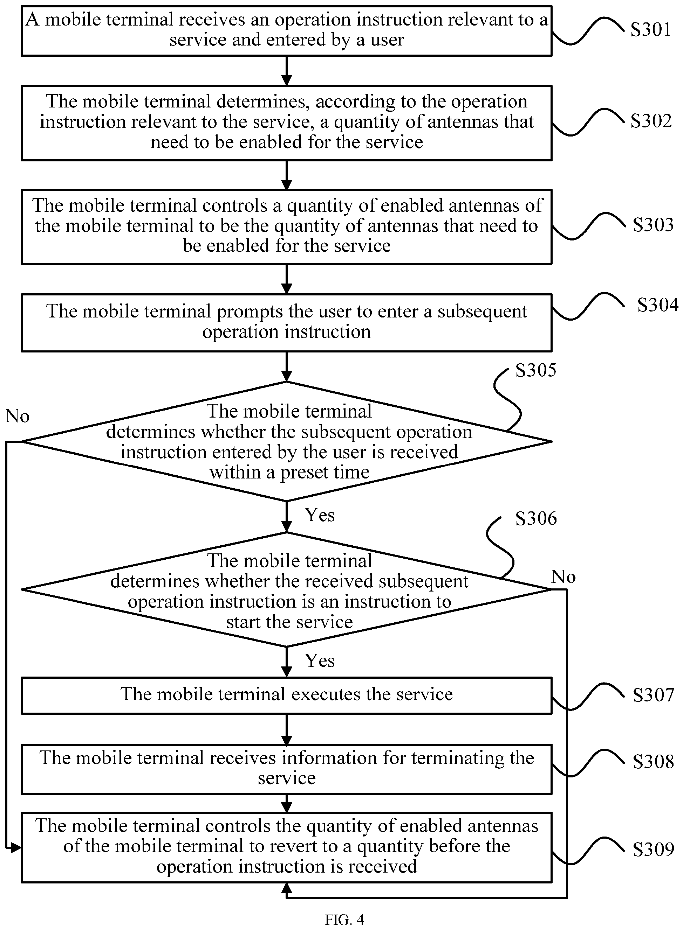

FIG. 4 is a flowchart of Embodiment 3 of a control method for a mobile terminal antenna according to the present invention. As shown in FIG. 4, in this embodiment, a start command of a service is an operation instruction, and in this case, a specific process is as follows:
S301: A mobile terminal receives an operation instruction relevant to a service and entered by a user.
S302: The mobile terminal determines, according to the operation instruction relevant to the service, a quantity of antennas that need to be enabled for the service.

For example, in S301, if the user taps a "Radio" icon, the mobile terminal receives an operation instruction relevant to listening to a radio service and entered by the user; or if the user taps a "Phone" app (application, application) icon and a "Contacts" app icon, the mobile terminal receives an operation instruction relevant to a session service, and then the mobile terminal begins to execute the service. Therefore, in this embodiment, the operation instruction relevant to the service is a start command; and then in S302, the mobile terminal determines, according to the operation instruction relevant to the service, a service to be executed and a quantity of antennas that need to be enabled for the service.

S303: The mobile terminal controls a quantity of enabled antennas of the mobile terminal to be the quantity of antennas that need to be enabled for the service.

By using an example in which the user taps a "Contacts" app, the mobile terminal determines, by using S302, that the service to be executed is the session service, but determines, by using S302, that a quantity of antennas that need to be enabled for the session service is 2, and then in S303, the mobile terminal disables 2 antennas, and retains 2 enabled antennas.

It may be understood that, if the operation instruction relevant to the service is tapping a "Radio" app, and the mobile terminal enables, by using S301 to S303, an antenna required for listening to the radio service, and directly executes the service, the following S304 to S309 may not be performed. For some services, to improve user experience, or avoid that the operation instruction entered by the user is a result of pressing by mistake by the user, before executing the service, the mobile terminal further needs to receive a subsequent operation instruction, to determine that the user decides to start the service. For example, after the user taps the "Contacts" app icon, the mobile terminal displays multiple contact options and a "Return" option to the user; the mobile terminal does not confirm that the user decides to start the session service, until the user further taps a dial option that follows a contact and corresponds to an option of the contact; or if the user selects the "Return" option, it indicates that the user decides not to start the session service. Details are as shown in S304 to S309:
S304: The mobile terminal prompts the user to enter a subsequent operation instruction.
S305: The mobile terminal determines whether a subsequent operation instruction entered by the user is received within a preset time, and if yes, performs S306; or if not, performs S309.

The user cannot enter a subsequent operation instruction in time in a case in which the user presses an icon by mistake without being aware of it, but the mobile terminal cannot wait all along for the user to enter a subsequent operation instruction; therefore the mobile terminal needs to determine whether a subsequent operation instruction is received within the preset time.

S306: The mobile terminal determines whether the received subsequent operation instruction is an instruction to start the service, and if yes, performs S307; or if not, performs S309.

Multiple contact options and dial options corresponding to the contact options are displayed on a display of the mobile terminal, while there are also options such as "Return" and "Put into the blacklist". If the user taps a "Dial" option, the mobile terminal determines that the user enters a subsequent operation instruction to start the service; or if the user taps an option such as "Back" or "Put into the blacklist", the mobile terminal determines that the user enters a subsequent operation instruction not used for starting the service, that is, the session service is ended before being started, and therefore S309 is performed.

S307: The mobile terminal executes the service.

S308: The mobile terminal receives information for terminating the service.

Specifically, refer to S208.

S309: The mobile terminal controls the quantity of enabled antennas of the mobile terminal to revert to a quantity before the operation instruction is received.

In S305, when the mobile terminal determines that a subsequent operation instruction entered by the user is not received within the preset time, it may be considered that the service is ended before being executed; in S306, when the mobile terminal determines that the received subsequent operation instruction is an instruction not used for starting the service, it may also be considered that the service is ended before being executed; and in S308, the mobile terminal receives the information for terminating the service. Therefore, when the mobile terminal determines that an operation instruction entered by the user is not received within the preset time, or when the mobile terminal determines that the received operation instruction is an instruction not used for starting the service, or after the mobile terminal begins to execute the service, the mobile terminal receives the information for terminating the service, in S309, it may be considered that the mobile terminal terminates the service, and controls the quantity of enabled antennas of the mobile terminal to revert to the quantity before the service signal is received.

In this embodiment, a mobile terminal determines, according to a received start command of a service, a quantity of antennas that need to be enabled for the service, and flexibly changes a quantity of enabled antennas on the mobile terminal, thereby preventing that the quantity of enabled antennas on the mobile terminal cannot meet a requirement for executing the service, and also preventing that the quantity of enabled antennas on the mobile terminal is excessive, which causes unnecessary power consumption and affects performance of the mobile terminal.

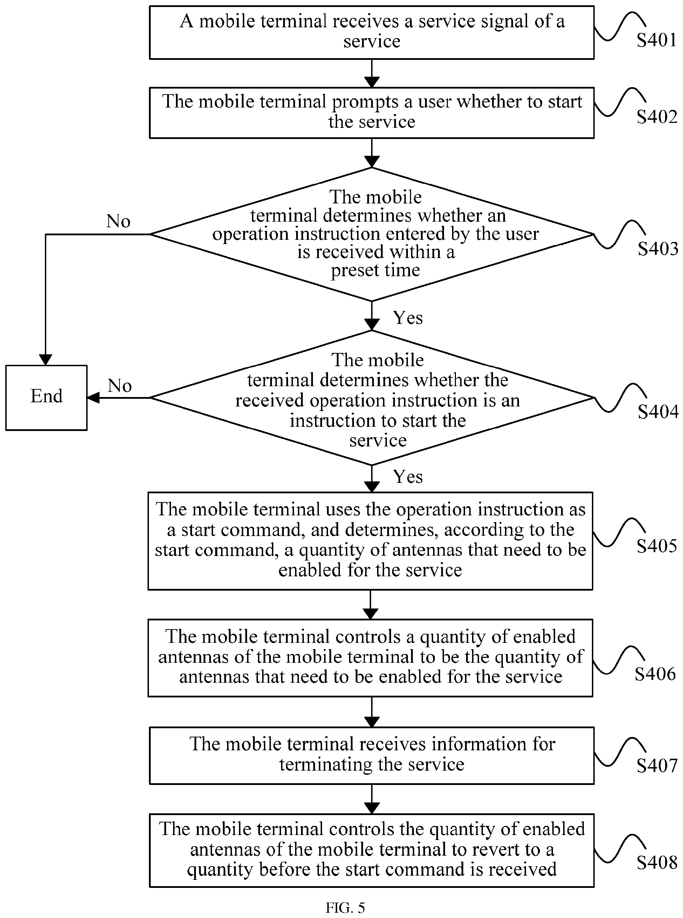

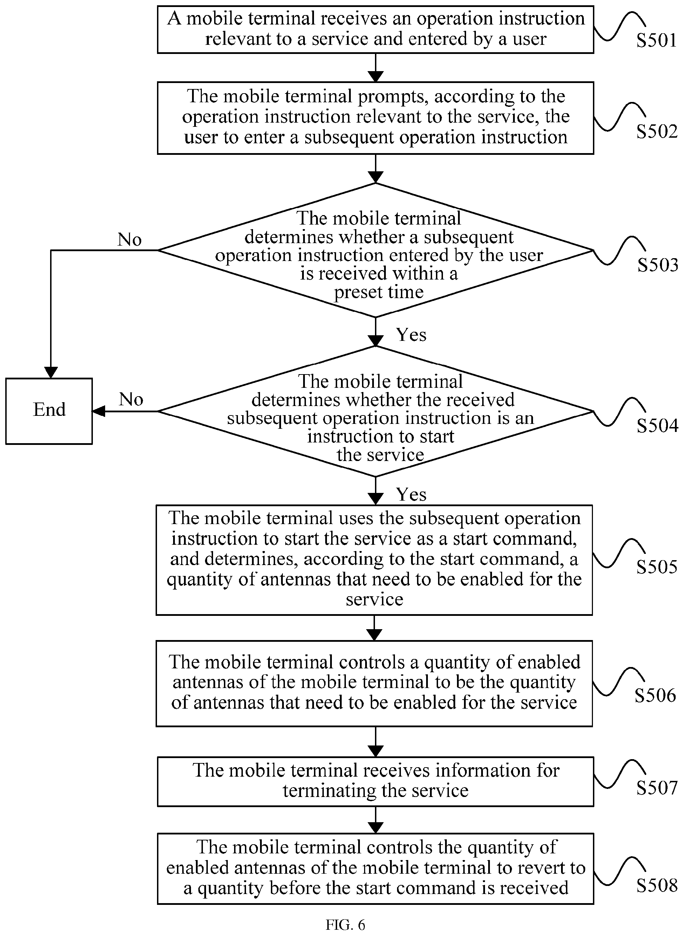

In the foregoing embodiment, a received service signal or an operation instruction relevant to a service is used as a start command. In some cases, when a mobile terminal receives the service signal or the operation instruction relevant to the service, the mobile terminal only prepares for executing the service but does not immediately execute the service, however, to efficiently provide the service for a user, the mobile terminal still immediately controls a quantity of enabled antennas of the mobile terminal to be a quantity of antennas that need to be enabled for the service to be executed. However, in some cases, the operation instruction relevant to the service is a result of pressing by mistake by the user, or the service signal is received but the user cannot immediately give an instruction, that is, the mobile terminal does not receive an operation instruction within a preset time, and in this case, the mobile terminal needs to be controlled to revert the quantity of enabled antennas to a quantity before the start command is received. In this process, unnecessary control of enabling/off occurs on the mobile terminal. The control of enabling/off an antenna by the mobile terminal also needs overheads, and the unnecessary control of enabling/off causes a waste of overheads; therefore preferably, the control of enabling/off an antenna may be further performed by using the embodiment shown in FIG. 5 or FIG. 6:

FIG. 5 is a flowchart of Embodiment 4 of a control method for a mobile terminal antenna according to the present invention. As shown in FIG. 5, this embodiment includes:
S401: A mobile terminal receives a service signal of a service.
S402: The mobile terminal prompts a user whether to start the service.
S403: The mobile terminal determines whether an operation instruction entered by the user is received within a preset time, and if yes, performs S404; or if not, ends the process.

By using an incoming call paging message as an example of the service signal, the user puts a mobile phone in a handbag and is not aware that there is a call, or the user is not near the mobile terminal and cannot enter an operation instruction in time, but the mobile terminal cannot wait all along for the user to enter the operation instruction; therefore the mobile terminal needs to determine whether the operation instruction is received within the preset time.

S404: The mobile terminal determines whether the received operation instruction is an instruction to start the service, and if yes, performs S405; or if not, ends the process.

Options such as "Answer" and "Reject" are displayed on a display of the mobile terminal. If the user taps "Answer", the mobile terminal determines that the user enters the operation instruction to start the service; or if the user taps "Reject", the mobile terminal determines that the user enters an operation instruction not used for starting the service, that is, the session service is ended before being started, and this embodiment ends.

S405: The mobile terminal uses the operation instruction as a start command, and determines, according to the start command, a quantity of antennas that need to be enabled for the service.

That is, the mobile terminal determines that the operation instruction received within the preset time is the instruction to start the service, and then uses the operation instruction as the start command.

S406: The mobile terminal controls a quantity of enabled antennas of the mobile terminal to be the quantity of antennas that need to be enabled for the service.

When performing S406, the mobile terminal performs the service at the same time.

S407: The mobile terminal receives information for terminating the service.

S408: The mobile terminal controls the quantity of enabled antennas of the mobile terminal to revert to a quantity before the start command is received.

At the same time, the mobile terminal terminates the service.

In this embodiment, when the service signal is received, the quantity of enabled antennas is not immediately changed. When the operation instruction entered by the user to start the service is received, the operation instruction to start the service is used as the start command. Other steps are similar to the corresponding steps in the embodiment shown in FIG. 3. For details, reference may be made to the corresponding steps in the embodiment shown in FIG. 3. In this embodiment, the operation instruction to start the service is used as the start command, which can avoid unnecessary overheads for enabling/off an antenna.

In this embodiment, a mobile terminal determines, according to a received start command of a service, a quantity of antennas that need to be enabled for the service, and flexibly changes a quantity of enabled antennas on the mobile terminal, thereby preventing that the quantity of enabled antennas on the mobile terminal cannot meet a requirement for executing the service, and also preventing that the quantity of enabled antennas on the mobile terminal is excessive, which causes unnecessary power consumption and affects performance of the mobile terminal.

FIG. 6 is a flowchart of Embodiment 5 of a control method for a mobile terminal antenna according to the present invention. As shown in FIG. 6, this embodiment includes:
S501: A mobile terminal receives an operation instruction relevant to a service and entered by a user.
S502: The mobile terminal prompts, according to the operation instruction relevant to the service, the user to enter a subsequent operation instruction.
S503: The mobile terminal determines whether a subsequent operation instruction entered by the user is received within a preset time, and if yes, performs S504; or if not, ends the process.

The user cannot enter a subsequent operation instruction in time in a case in which the user presses an icon by mistake without being aware of it, but the mobile terminal cannot wait all along for the user to enter a subsequent operation instruction; therefore the mobile terminal needs to determine whether the subsequent operation instruction is received within the preset time, and if yes, S504 is performed; or if not, the process is ended.

S504: The mobile terminal determines whether the received subsequent operation instruction is an instruction to start the service, and if yes, performs S505; or if not, ends the process.

Multiple contact options and dial options corresponding to the contact options are displayed on a display of the mobile terminal, while there are also options such as "Return" and "Put into the blacklist". If the user taps a "Dial" option, the mobile terminal determines that the user enters a subsequent operation instruction to start the service; or if the user taps an option such as "Return" or "Add to blacklist", the mobile terminal determines that the user enters a subsequent operation instruction not used for starting the service, and then ends this embodiment.

S505: The mobile terminal uses the subsequent operation instruction to start the service as a start command, and determines, according to the start command, a quantity of antennas that need to be enabled for the service.

The mobile terminal receives the subsequent operation instruction to start the service, and therefore the subsequent operation instruction to start the service is used as the start command.

S506: The mobile terminal controls a quantity of enabled antennas of the mobile terminal to be the quantity of antennas that need to be enabled for the service.

At the same time, the service is executed.

S507: The mobile terminal receives information for terminating the service.

S508: The mobile terminal controls the quantity of enabled antennas of the mobile terminal to revert to a quantity before the start command is received.

At the same time, the mobile terminal terminates the service.

Compared with the embodiment shown in FIG. 4, in this embodiment, when the operation instruction relevant to the service is received, the quantity of enabled antennas is not immediately changed. When the subsequent operation instruction entered by the user to start the service is received, the operation instruction to start the service is used as the start command. Other steps are similar to the corresponding steps in the embodiment shown in FIG. 4. For details, reference may be made to the corresponding steps in the embodiment shown in FIG. 4. In this embodiment, the subsequent operation instruction to start the service is used as the start command, which can avoid unnecessary overheads for enabling/off an antenna.

In this embodiment, a mobile terminal determines, according to a received start command of a service, a quantity of antennas that need to be enabled for the service, and flexibly changes a quantity of enabled antennas on the mobile terminal, thereby preventing that the quantity of enabled antennas on the mobile terminal cannot meet a requirement for executing the service, and also preventing that the quantity of enabled antennas on the mobile terminal is excessive, which causes unnecessary energy loss and affects performance of the mobile terminal.

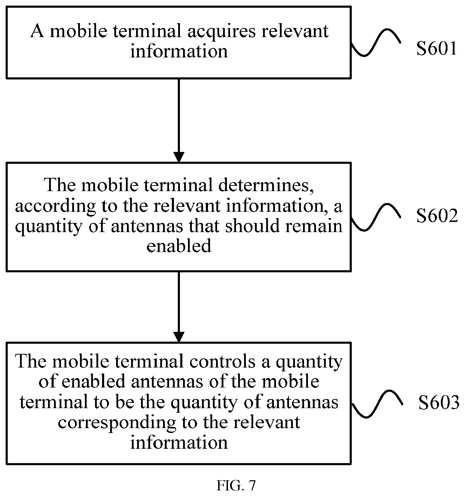

FIG. 7 is a flowchart of Embodiment 6 of a control method for a mobile terminal antenna according to the present invention. As shown in FIG. 7, this embodiment includes:
S601: A mobile terminal acquires relevant information.

The relevant information is at least any of the following information: environment information relevant to the mobile terminal, a relevant parameter of the mobile terminal, and a current work mode of the mobile terminal.

S602: The mobile terminal determines, according to the relevant information, a quantity of antennas that should remain enabled.

Specifically, the relevant information acquired by the mobile terminal is a relevant parameter, where the relevant parameter indicates that radiation of the mobile terminal is excessive, which easily causes harmful impact on a user. Therefore, the radiation needs to be reduced by disabling some antennas. For example, if the mobile terminal enables 4 antennas currently, causing excessive radiation of the mobile terminal, it is determined, by using S602, that the quantity of antennas that should remain enabled is 2, and therefore, 2 antennas are disabled by using S603.

S603: The mobile terminal controls a quantity of enabled antennas of the mobile terminal to be the quantity of antennas corresponding to the relevant information.

In this embodiment, a mobile terminal determines, according to acquired relevant information, a quantity of antennas that should remain enabled on the mobile terminal, and flexibly changes a quantity of enabled antennas on the mobile terminal, thereby preventing the quantity of enabled antennas on the mobile terminal from causing harmful impact on surroundings, or consuming energy such as electricity of the mobile terminal excessively fast and affecting performance of the mobile terminal.

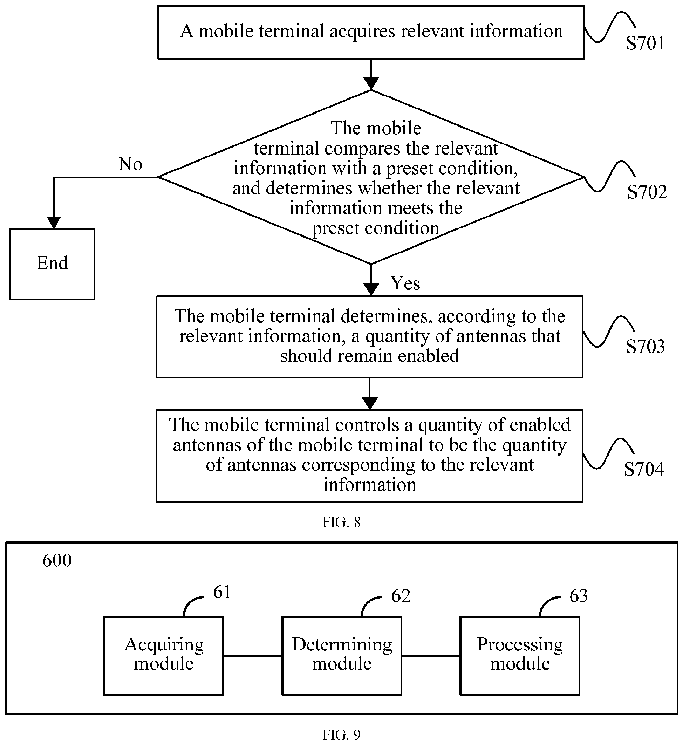

FIG. 8 is a flowchart of Embodiment 7 of a control method for a mobile terminal antenna according to the present invention. As shown in FIG. 8, on the basis of the embodiment shown in FIG. 7, this embodiment provides further detailed description, and specifically includes:
S701: A mobile terminal acquires relevant information.
S702: The mobile terminal compares the relevant information with a preset condition, and determines whether the relevant information meets the preset condition, and if yes, performs S703; or if not, ends the process.

Specifically, if the relevant information is specifically a radiant intensity reflected by a relevant parameter, the preset condition is being greater than a preset radiation threshold. When it is determined, by using S702, that the radiant intensity is greater than the preset radiation threshold, S703 is performed, or else, it indicates that the quantity of antennas currently enabled by the mobile terminal does not affect a user nearby, and in this case, no antenna needs to be disabled, and this embodiment is ended. Alternatively, it may be considered that the mobile terminal performs S703, that is, when the quantity of antennas currently enabled by the mobile terminal does not affect the user nearby, it is determined, according to the relevant information, that a quantity of antennas that should remain enabled is maintained the same as that before the relevant information is acquired. If the relevant information is specifically a signal strength reflected by the relevant parameter, the preset condition is being less than the preset signal threshold. When it is determined, by using S702, that the signal strength is less than the preset signal threshold, S703 is performed, to enable more antennas to ensure that the mobile terminal normally provides a service for a user, or else, it indicates that the quantity of antennas currently enabled by the mobile terminal meets a requirement for normal operation of the mobile terminal, and in this case, control of enabling an antenna does not need to be performed, and this embodiment is ended. Alternatively, it may be considered that the mobile terminal performs S703, that is, when the current signal strength of the mobile terminal is greater than the preset signal threshold, it is determined, by using S703, that a quantity of enabled antennas does not need to be increased, that is, it is determined, according to the relevant information, that a quantity of antennas that should remain enabled is maintained the same as that before the relevant information is acquired.

If the relevant information does not meet the preset condition, it indicates that the quantity of enabled antennas on the mobile terminal does not need to be changed, and then this embodiment is ended. Alternatively, in other words, S703 and S704 are still performed, that is, it is determined, by using S703 according to the relevant information that does not meet the preset condition, that the quantity of enabled antennas is maintained the same as that before the relevant information is acquired; and then in S704, the mobile terminal is controlled to maintain the quantity of enabled antennas to be the same as the quantity before S701.

S703: The mobile terminal determines, according to the relevant information, a quantity of antennas that should remain enabled.

S704: The mobile terminal controls a quantity of enabled antennas of the mobile terminal to be the quantity of antennas corresponding to the relevant information.

Further, the relevant information is at least any of the following information: environment information relevant to the mobile terminal, a relevant parameter of the mobile terminal, and a current work mode of the mobile terminal. Correspondingly, there are the following five cases for possible relevant information:
a first case: when the relevant information is the environment information relevant to the terminal, and the environment information is a user within radiation of the mobile terminal, the preset condition is preset biological information;
a second case: when the environment information is a scenario in which the mobile terminal is located, the preset condition is a preset limitation scenario;
a third case: when the relevant information is the relevant parameter of the terminal, and the relevant parameter is a radiant intensity of the mobile terminal, the preset condition is being greater than a preset radiation threshold;
a fourth case: when the relevant parameter is a signal strength of the mobile terminal, the preset condition is being less than a preset signal threshold; and
a fifth case: when the relevant parameter is the current work mode of the mobile terminal, the preset condition is a preset work mode.

For the first case, the following steps are used to represent a specific execution process of S701 to S702, that is:
S11a: The mobile terminal receives a user feature sent by a third-party device.

The third-party device is an intelligent wearable device, where the third-party device may acquire a user feature of a user of the mobile terminal or a person nearby, who is specifically an adult, an elderly person, a pregnant woman, a child, or the like.

Alternatively, S11a may be replaced with S11b.

S11b: The mobile terminal parses an operation instruction entered by a user or acquired user information, to acquire a user feature.

For example, the operation instruction is to "access a pregnant woman web page", or open an app called "Healthcare for the elderly"; then after the operation instruction is parsed, a keyword "pregnant woman" or "the elderly" is obtained, indicating that a user who uses the mobile terminal is a pregnant woman or an elderly person; and then it is determined, by using S12, whether these keywords used as the user feature meet the preset biological information.

The user information is entered by the user or is sent by the third-party device; for example, the user obtains, by using a camera or a temperature sensor of the mobile terminal, user information such as a face image and body temperature of the user who uses the mobile terminal or face images and body temperature of people near the mobile terminal, or the third-party device such as the intelligent wearable device collects user information such as body temperature, and skin humidity and elasticity of the user; and then after parsing the user information, the mobile terminal acquires the user feature, that is, the user feature determined according to the user information is specifically a biological feature such as an elderly person, a child, a pregnant woman, or an adult.

S12: The mobile terminal compares the user feature with the preset biological information, and determines whether the user feature meets the preset biological information, and if yes, performs S703; or if not, ends the process.

For example, the preset biological information specifically includes an elderly person, a child, and a pregnant woman. If the user feature obtained by using S11 is an elderly person, it is determined, by using S12, that the user feature meets the preset biological information, and therefore some antennas need to be disabled to reduce radiation to the elderly person. If the user feature is an adult, no antenna needs to be disabled, that is, this embodiment is ended, or in other words, the mobile terminal still continues to perform S703 to S704: in this case, it is determined, by using S703, that the quantity of enabled antennas does not need to be changed for the adult, and then in S704, the quantity of enabled antennas is maintained the same as a quantity before the relevant information is acquired.

For the second case, the following steps are used to represent as a specific execution process of S701 to S702.

S21: The mobile terminal acquires scenario information.

The scenario information is acquired by using a sensor or a camera on the mobile terminal.

S22: The mobile terminal compares the scenario information with the preset limitation scenario, and determines whether the scenario information meets the preset limitation scenario, if yes, performs S703; or if not, ends the process.

Preset limitation scenarios are some scenarios such as a hospital and an airport in which radiation interference from the mobile terminal needs to be limited. For example, if an identifier of a hospital, an identifier of an airport, a child, a pregnant woman, an elderly person, or the like appears on an image captured by a camera, it is learned through image analysis of the mobile terminal that, a communications apparatus is located in an environment such a hospital or an airport, or there is a child, a pregnant woman, an elderly person, or the like in surroundings, and the mobile terminal continues to perform S703. Alternatively, if the scenario information is not any scenario prescribed by the preset limitation scenarios, control of enabling/off an antenna does not need to be performed, that is, this embodiment is ended, or in other words, the mobile terminal still continues to perform S703 to S704: in this case, it is determined, by using S703, that the quantity of enabled antennas does not need to be changed for any scenario that is not prescribed by the preset limitation scenarios, and then in S704, the quantity of enabled antennas is maintained the same as a quantity before the relevant information is acquired.

For the third case, the following steps are used to represent a specific execution process of S701 to S702.

S31: The mobile terminal detects a radiant intensity by itself, to obtain a current radiant intensity of the mobile terminal.

S32: The mobile terminal compares the detected radiant intensity of the mobile terminal with a preset radiation threshold, and determines whether the radiant intensity of the mobile terminal is greater than the preset radiation threshold, if yes, performs S703; or if not, ends the process. The ending the process may also be construed as continuing to perform S703 to S704, that is, the radiant intensity is not greater than the preset radiation threshold; and it is determined, by using S703, that the quantity of enabled antennas does not need to be changed for the adult, and then in S704, the quantity of enabled antennas is maintained the same as a quantity before the relevant information is acquired.

For the fourth case, the following steps are used to represent a specific execution process of S701 to S702.

S41: The mobile terminal detects a signal strength by itself, to obtain a current signal strength of the mobile terminal.

S42: The mobile terminal compares the detected signal strength of the mobile terminal with a preset signal threshold, and determines whether the signal strength of the mobile terminal is less than the preset signal threshold, if yes, performs S703; or if not, ends the process. The ending the process may also be construed as performing S703 to S704, that is, when the radiant intensity is greater than the preset radiation threshold, it is determined, by using S703, that the quantity of enabled antennas does not need to be changed, and then in S704, the quantity of enabled antennas is maintained the same as a quantity before the relevant information is acquired.

For the fifth case, the following steps are used to represent a specific execution process of S701 to S702.

S51: The mobile terminal acquires a current work mode.

The current work mode is set by the user, for example, a flight mode, a power saving mode, a normal mode, or an enhanced mode, and in this case, the preset work mode includes a mode in which a quantity of antennas to be enabled needs to be controlled, for example, the flight mode, the power saving mode, the normal mode, or the enhanced mode. For example, the normal mode is generally a default mode of the mobile terminal, and 4 antennas are maintained enabled; all antennas need to be disabled in the flight mode, only one antenna needs to be enabled in the power saving mode, and over 4 antennas need to be enabled in the enhanced mode; and in addition, the power saving mode may be set by the mobile terminal, for example, when the mobile terminal detects that a remaining electric quantity of the mobile terminal is lower than a preset electric quantity threshold, the power saving mode is set by the mobile terminal.

S52: The mobile terminal compares a current work mode of the mobile terminal with the preset work mode, and determines whether the current work mode meets the preset work mode, and if yes, performs S703; or if not, ends the process. The ending the process may also be construed as performing S703 to S704, that is, the current work mode is not any mode in the preset work modes, for example, if the current work mode is the normal mode, it is determined, by using S703, that only a default quantity of enabled antennas needs to be maintained for the normal mode, and the quantity of enabled antennas does not need to be changed, and then in S704, the quantity of enabled antennas is maintained the same as a quantity before the relevant information is acquired.

In this embodiment, a mobile terminal determines, according to acquired relevant information, a quantity of antennas that should remain enabled on the mobile terminal, and flexibly changes a quantity of enabled antennas on the mobile terminal, thereby preventing the quantity of enabled antennas on the mobile terminal from causing harmful impact on surroundings, or consuming energy such as electricity of the mobile terminal excessively fast and affecting performance of the mobile terminal.

FIG. 9 is a structural diagram of Embodiment 1 of a mobile terminal according to the present invention. As shown in FIG. 9, a mobile terminal 600 includes:
an acquiring module 61, configured to acquire a start command of a service;
a determining module 62, configured to determine, according to the start command, a quantity of antennas that need to be enabled for the service; and
a processing module 63, configured to control a quantity of enabled antennas of the mobile terminal to be the quantity of antennas that need to be enabled for the service.

In this embodiment, a mobile terminal determines, according to a received start command of a service, a quantity of antennas that need to be enabled for the service, and flexibly changes a quantity of enabled antennas on the mobile terminal, thereby preventing that the quantity of enabled antennas on the mobile terminal cannot meet a requirement for executing the service, and also preventing that the quantity of enabled antennas on the mobile terminal is excessive, which causes unnecessary energy loss and affects performance of the mobile terminal.

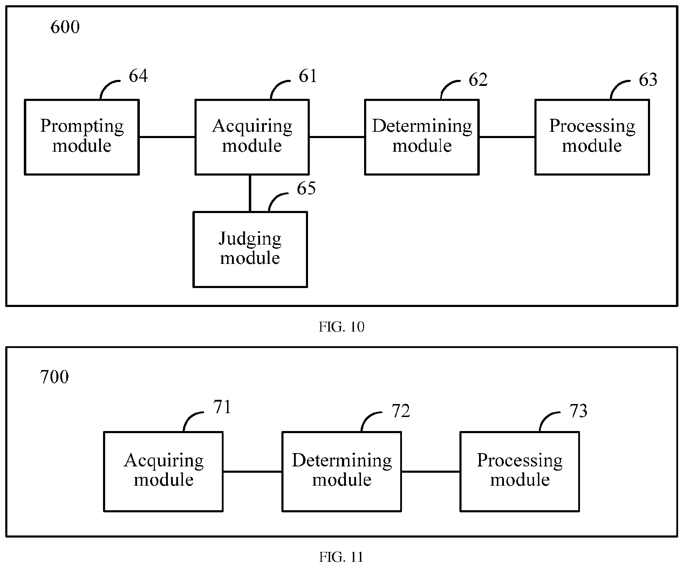

FIG. 10 is a structural diagram of Embodiment 2 of a mobile terminal according to the present invention. As shown in FIG. 10, on the basis of the embodiment shown in FIG. 9, this embodiment provides further detailed description, specifically,
the acquiring module 61 is specifically configured to receive a service signal of the service, where the service signal is the start command.

Further, the mobile terminal further includes a prompting module 64 and a judging module 65, where the prompting module 64 is configured to prompt a user whether to start the service; and
if the judging module 65 determines that the acquiring module 61 does not receive, within a preset time, an operation instruction entered by the user, or the judging module 65 determines that an operation instruction entered by the user and received by the acquiring module 61 within the preset time is not an instruction to start the service,
the processing module 63 controls the quantity of enabled antennas of the mobile terminal to revert to a quantity before the service signal is received.

Further, the acquiring module 61 is further configured to receive a service signal of the service;
the prompting module 64 is configured to prompting a user whether to start the service;
the acquiring module 61 is configured to receive an operation instruction entered by the user; and
the judging module 65 is configured to determine that the operation instruction is an instruction to start the service, and then the acquiring module 61 is specifically configured to use the operation instruction as the start command.

Further, the acquiring module 61 is specifically configured to
receive an operation instruction relevant to the service and entered by the user, where the operation instruction relevant to the service is the start command.

Optionally, the prompting module 64 is configured to prompt the user to enter a subsequent operation instruction; and
if the judging module 65 determines that the acquiring module 61 does not receive, within a preset time, a subsequent operation instruction entered by the user, or the judging module 65 determines that a subsequent operation instruction entered by the user and received by the acquiring module 61 within the preset time is not an instruction to start the service,
the processing module 63 is configured to control the quantity of enabled antennas of the mobile terminal to revert to a quantity before the service signal is received.

Optionally, the acquiring module 61 receives an operation instruction relevant to the service and entered by a user;
the prompting module 64 prompts, according to the operation instruction relevant to the service, the user to enter a subsequent operation instruction; and
the judging module 65 determines that the acquiring module 61 receives a subsequent operation instruction to start the service, and then the acquiring module 61 uses the subsequent operation instruction to start the service as the start command.

Further, the acquiring module 61 is further configured to receive information for terminating the service; and
the processing module 63 terminates the service, and controls the quantity of enabled antennas of the mobile terminal to revert to a quantity before the start command is received.

In this embodiment, a mobile terminal determines, according to a received start command of a service, a quantity of antennas that need to be enabled for the service, and flexibly changes a quantity of enabled antennas on the mobile terminal, thereby preventing that the quantity of enabled antennas on the mobile terminal cannot meet a requirement for executing the service, and also preventing that the quantity of enabled antennas on the mobile terminal is excessive, which causes unnecessary energy loss and affects performance of the mobile terminal.

FIG. 11 is a structural diagram of Embodiment 3 of a mobile terminal according to the present invention. As shown in FIG. 11, a mobile terminal 700 in this embodiment includes:
an acquiring module 71, configured to acquire relevant information, where the relevant information is at least any of the following information: environment information relevant to the mobile terminal, a relevant parameter of the mobile terminal, and a current work mode of the mobile terminal;
a determining module 72, configured to determine, according to the relevant information, a quantity of antennas that should remain enabled; and
a processing module 73, configured to control a quantity of enabled antennas of the mobile terminal to be the quantity of antennas corresponding to the relevant information.

Further, the determining module 72 is further configured to compare the relevant information with a preset condition, and determine whether the relevant information meets the preset condition, where
when the relevant information is the environment information relevant to the terminal, and the environment information is a user within radiation of the mobile terminal, the preset condition is preset biological information;
when the environment information is a scenario in which the mobile terminal is located, the preset condition is a preset limitation scenario;
when the relevant information is the relevant parameter of the terminal, and the relevant parameter is a radiant intensity of the mobile terminal, the preset condition is being greater than a preset radiation threshold;
when the relevant parameter is a signal strength of the mobile terminal, the preset condition is being less than a preset signal threshold; and
when the relevant parameter is the current work mode of the mobile terminal, the preset condition is a preset work mode.

Further, when the environment information is the user within the radiation of the mobile terminal, the determining module 72 is specifically configured to
compare a user feature sent by a third-party device with the preset biological information, and determine whether the user feature sent by the third-party device meets the preset biological information;
or, the acquiring module 71 is further configured to parse an operation instruction entered by the user or acquired user information, to acquire a user feature; and
the determining module 72 is further configured to compare the user feature with the preset biological information, and determine whether the user feature meets the preset biological information, where the user information is entered by the user or sent by a third-party device; and
if the user feature meets the preset biological information, the processing module 73 is configured to determine, according to the relevant information, the quantity of antennas that should remain enabled.

When the environment information is the scenario in which the mobile terminal is located, the determining module 72 is specifically configured to compare scenario information with the preset limitation scenario, and determine whether the scenario information meets the preset limitation scenario, where
the scenario information is acquired by using a sensor or a camera on the mobile terminal; and
if the scenario information meets the preset limitation scenario, the processing module 73 is configured to determine, according to the relevant information, the quantity of antennas that should remain enabled.

When the relevant parameter is the radiant intensity of the mobile terminal, the determining module 72 is specifically configured to compare the detected radiant intensity of the mobile terminal with the preset radiation threshold, and determine whether the radiant intensity of the mobile terminal is greater than the preset radiation threshold; and
if the radiant intensity of the mobile terminal is greater than the preset radiation threshold, the processing module 73 is configured to determine, according to the relevant information, the quantity of antennas that should remain enabled; or
when the relevant parameter is the signal strength of the mobile terminal, the determining module 72 is specifically configured to compare the detected signal strength of the mobile terminal with the preset signal threshold, and determine whether the signal strength of the mobile terminal is less than the preset signal threshold; and
if the radiant intensity of the mobile terminal is greater than the preset radiation threshold, the processing module 73 is configured to determine, according to the relevant information, the quantity of antennas that should remain enabled.

When the relevant parameter is the current work mode of the mobile terminal, the determining module 72 compares the current work mode of the mobile terminal with the work mode, and determines whether the current work mode meets the preset work mode, where the current work mode is set by the user, or is set by the mobile terminal when the mobile terminal detects that a remaining electric quantity of the mobile terminal is lower than a preset electric quantity threshold; and
if the current work mode of the mobile terminal meets the preset work mode, the processing module 73 is configured to determine, according to the relevant information, the quantity of antennas that should remain enabled.

In this embodiment, a mobile terminal determines, according to acquired relevant information, a quantity of antennas that should remain enabled on the mobile terminal, and flexibly changes a quantity of enabled antennas on the mobile terminal, thereby preventing the quantity of enabled antennas on the mobile terminal from causing harmful impact on surroundings, or consuming energy such as electricity of the mobile terminal excessively fast and affecting performance of the mobile terminal.

It needs to be additionally noted that, the modules in the embodiments of the mobile terminal correspondingly perform the steps in the method embodiments shown in FIG. 2 to FIG. 8, and reference may be made to the method embodiments for a specific execution process and a beneficial effect.

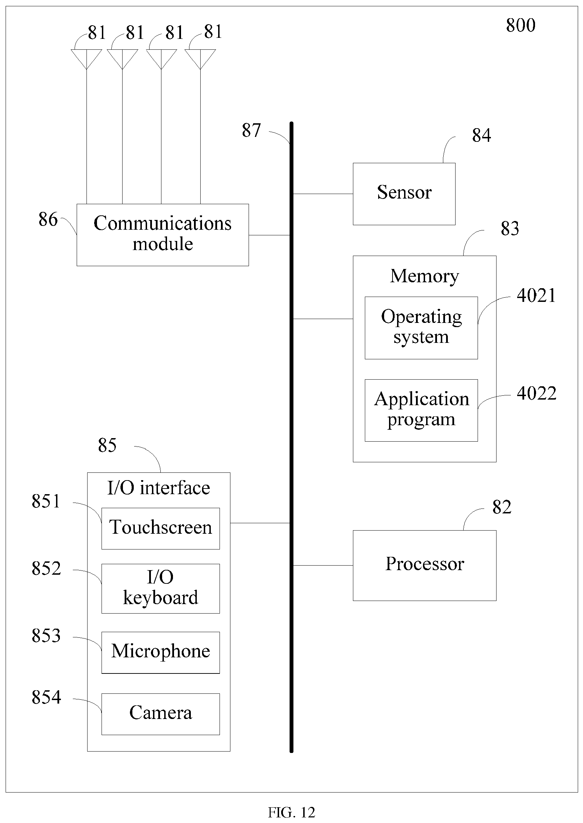

FIG. 12 is a structural diagram of Embodiment 4 of a mobile terminal according to the present invention. As shown in FIG. 12, the mobile terminal in this embodiment is only an example. It may be understood that, in an actual application, the mobile terminal may be a smartphone, an iPad, or the like. Modules and parts inside different mobile terminals are not the same; and therefore, in practice, the mobile terminal may have parts that are more or fewer than those shown in FIG. 12, may combine two or more parts, or may have different part configurations. The parts shown in FIG. 12 may be implemented in hardware, software, or a combination of hardware and software, which includes one or more signal processing and/or application-specific integrated circuits.

A mobile terminal 800 includes at least 2 antennas 81, at least one processor 82, a memory 83, a sensor 84, an I/O interface 85, a communications module 86, and at least one communications bus 87. Further, the mobile terminal further includes another functional component, for example, a battery module for battery management, a user setting management module, or a parameter detection module; and the communications bus 87 is configured to implement connection communication between modules and components. The memory 83 may include a non-volatile solid-state memory and/or a dynamic non-volatile storage device, for example, a flash memory, or a rotatable magnetic disk drive. The sensor 84 includes various sensors, such as a temperature sensor and a humidity sensor, and is configured to measure information such as body temperature and skin humidity of a user who uses the mobile terminal; the communications module 86 may be used for long distance communication such as GSM (Global System for Mobile Communication), CDMA (Code Division Multiple Access), a GPRS (eneral Packet Radio Service), or EDGE (Enhanced Data Rate for GSM Evolution), a 3G technology such as WCDMA (Wideband Code Division Multiple Access) or TD-SCDMA (Time Division-Synchronous Code Division Multiple Access), a 4G technology such as LTE (Long Term Evolution), or the like; and the communications module 86 may be further used for short distance communication, and may perform short distance radio communication, such as ZigBee, UWB, Wi-Fi, Bluetooth, NFC, and infrared communication, with a third-party device (such as an intelligent wearable device) within a short distance, and the antenna 81 that coordinates with the communications module 86 is configured to receive and send a signal.

Specifically, the I/O interface 85 includes a touchscreen 851 for display and input, an I/O keyboard 852 (optional) for input, a microphone 853, a camera 854, or the like.

Specifically, the memory 83 includes an operating system 4021 and an application program 4022, where the operating system 4021 includes various operating system programs, which are used to implement various operations that are based on hardware; and the application program 4022 includes various application programs, which are used to implement various application functions, for example, a control program for enabling/off an antenna, a service identification program, a user feature identification program, and a relevant information identification program, where the service identification program may identify, according to an operation entered by the user or a service signal received by the mobile terminal, a service that the mobile terminal is about to execute, and the user feature identification program may analyze an acquired image, to obtain a keyword, a user feature, or the like, or may perform analysis according to voiceprint information entered by the user, to acquire a user feature, or may analyze user information sent by a third-party device (such as an intelligent wearable device) and received by the communications module, to obtain a user feature.

Further, the memory 83 may further store a preset condition, where the preset condition may be preset biological information, a preset limitation scenario, a preset radiation threshold, a preset signal threshold, a preset work mode, or the like.

The processor 82 communicates with the modules and components by using the communications bus 87. During control of disabling or enabling an antenna on the mobile terminal, when the communications module 86 receives a service signal of a service by using the antenna 81; based on the service identification program in the memory, the processor identifies the service and determines a quantity of antennas that need to be enabled for the service, and then based on the control program for enabling/off an antenna, controls a quantity of enabled antennas of the mobile terminal to be the quantity of antennas that need to be enabled for the service.

Optionally, when the user enters an operation instruction by using the touchscreen, based on the service identification program, the processor identifies the service and determines a quantity of antennas that need to be enabled for the service, and then based on the control program for enabling/off an antenna, controls a quantity of enabled antennas of the mobile terminal to be the quantity of antennas that need to be enabled for the service.

In addition, the processor 82 may further control the touchscreen 851 by using the communications bus 87, and prompting the user whether to start the service and prompt the user to enter an operation instruction.

Further, when the relevant information obtained by the processor 82 is a user within radiation of the mobile terminal, the processor 82 parses the user information based on the user feature identification program, to obtain a user feature, compares the user feature with the preset biological information stored in the memory, and then based on the control program for enabling/off an antenna, controls the quantity of enabled antennas of the mobile terminal to be a quantity of antennas corresponding to the user feature, where the user information may be voiceprint information entered by the user by using the microphone, a face image captured by the user by using the camera, or user body temperature, skin humidity, or the like sensed by the temperature sensor or the humidity sensor, or may be user information sensed by the intelligent wearable device and received by the communications module, or the operation instruction that is from the user and received by the touchscreen.

Alternatively, the processor 82 may further analyze some relevant information based on the relevant information identification program, compare the relevant information with the preset condition stored in the memory, and then based on the control program for enabling/off an antenna, control the quantity of enabled antennas of the mobile terminal to be the quantity of antennas corresponding to the relevant information, where the relevant information may be a scenario in which the mobile terminal is located, where the scenario is acquired from a picture shot by the camera, and the relevant information identification program may identify content in the scenario picture, for example, a keyword such as hospital or airport; or the relevant information is a signal strength, radiant intensity, or the like of the mobile terminal acquired by the parameter detection module; or the relevant information is an work mode set in the user setting management module, where the work mode may be set by the user by using an operation instruction entered by means of the touchscreen 851 or the keyboard 852. The user setting management module further communicates with the battery module by using the communications bus 87, and detecting that a remaining electric quantity is less than a preset threshold, the battery module may instruct the user setting management module to set the work mode to a power saving mode.

In this embodiment, a mobile terminal determines, according to a received start command of a service, a quantity of antennas that need to be enabled for the service, and flexibly changes a quantity of enabled antennas on the mobile terminal, thereby preventing that the quantity of enabled antennas on the mobile terminal cannot meet a requirement for executing the service, and also preventing that the quantity of enabled antennas on the mobile terminal is excessive, which causes unnecessary energy loss; and in addition, the mobile terminal may further determine, according to acquired relevant information, a quantity of antennas that should remain enabled on the mobile terminal, and flexibly change the quantity of enabled antennas on the mobile terminal, thereby preventing the quantity of enabled antennas on the mobile terminal from causing harmful impact on surroundings, or consuming energy such as electricity of the mobile terminal excessively fast and affecting performance of the mobile terminal.

Persons of ordinary skill in the art may understand that all or some of the steps of the method embodiments may be implemented by a program instructing relevant hardware. The program may be stored in a computer-readable storage medium. When the program runs, the steps of the method embodiments are performed. The foregoing storage medium includes: any medium that can store program code, such as a ROM, a RAM, a magnetic disk, or an optical disc.

## Claims

1. A control method for a mobile terminal antenna, comprising:
acquiring (S701), by a mobile terminal, relevant information, wherein the relevant information comprises environment information relevant to the mobile terminal;
determining (S703), by the mobile terminal according to the relevant information, a quantity of antennas that should remain enabled; and
controlling (S704), by the mobile terminal, a quantity of enabled antennas of the mobile terminal to be the quantity of antennas corresponding to the relevant information, wherein before the determining (S703), by the mobile terminal according to the relevant information, a quantity of antennas that should remain enabled, the method further comprising:
comparing (S702), by the mobile terminal, the relevant information with a preset condition, and determining whether the relevant information meets the preset condition,
wherein the environment information is a user within radiation of the mobile terminal, the preset condition is preset biological information;
wherein the control method further comprises:
comparing, by the mobile terminal, a user feature sent by a third-party device with the preset biological information, and determining whether the user feature sent by the third-party device meets the preset biological information; or,
parsing, by the mobile terminal, an operation instruction entered by the user or acquired user information, to acquire a user feature; and
comparing, by the mobile terminal, the user feature with the preset biological information, and determining whether the user feature meets the preset biological information, wherein the user information is entered by the user or sent by a third-party device; and
if the user feature meets the preset biological information, determining, by the mobile terminal according to the relevant information, the quantity of antennas that should remain enabled, and
wherein the user feature indicates whether the user is an adult, an elderly person, a pregnant woman, or a child.

2. A mobile terminal configured to perform the method according to claim 1.

## Patentansprüche

1. Steuerverfahren für eine Mobilendgerätantenne, das Folgendes umfasst:
Erfassen (S701), durch ein Mobilendgerät, relevanter Informationen, wobei die relevanten Informationen Umgebungsinformationen umfassen, die für das Mobilendgerät relevant sind;
Bestimmen (S703), durch das Mobilendgerät gemäß den relevanten Informationen, einer Anzahl an Antennen, die aktiviert verbleiben sollten; und
Steuern (S704), durch das Mobilendgerät, einer Anzahl an aktivierten Antennen des Mobilendgeräts, die die Anzahl an Antennen sein sollen, die den relevanten Informationen entsprechen,
wobei das Verfahren vor dem Bestimmen (S703), durch das Mobilendgerät gemäß den relevanten Informationen, einer Anzahl an Antennen, die aktiviert verbleiben sollten, ferner Folgendes umfasst:
Vergleichen (S702), durch das Mobilendgerät, der relevanten Informationen mit einer voreingestellten Bedingung und Bestimmen, ob die relevanten Informationen die voreingestellte Bedingung erfüllen,
wobei die Umgebungsinformationen ein Benutzer innerhalb einer Ausstrahlung des Mobilendgeräts ist, wobei die voreingestellte Bedingung voreingestellte biologische Informationen sind;
wobei das Steuerverfahren ferner Folgendes umfasst:
Vergleichen, durch das Mobilendgerät, eines Benutzermerkmals, das durch eine Drittparteivorrichtung gesendet wird, mit den voreingestellten biologischen Informationen, und Bestimmen, ob das Benutzermerkmal, das durch die Drittparteivorrichtung gesendet wird, die voreingestellten biologischen Informationen erfüllt; oder
Parsen, durch das Mobilendgerät, einer Operationsanweisung, die durch den Benutzer eingegeben wird, oder erfasster Benutzerinformationen, um ein Benutzermerkmal zu erfassen; und
Vergleichen, durch das Mobilendgerät, des Benutzermerkmals mit den voreingestellten biologischen Informationen, und Bestimmen, ob das Benutzermerkmal die voreingestellten biologischen Informationen erfüllt, wobei die Benutzerinformationen durch den Benutzer eingegeben oder durch eine Drittparteivorrichtung gesendet werden; und
falls das Benutzermerkmal die voreingestellten biologischen Informationen erfüllt, Bestimmen, durch das Mobilendgerät gemäß den relevanten Informationen, der Anzahl an Antennen, die aktiviert verbleiben sollten, und
wobei das Benutzermerkmal angibt, ob der Benutzer ein Erwachsener, ein älterer Mensch, eine schwangere Frau oder ein Kind ist.

2. Mobilendgerät, das zum Durchführen des Verfahrens nach Anspruch 1 konfiguriert ist.

## Revendications

1. Procédé de commande d'antenne de terminal mobile, comprenant les étapes consistant à :
acquérir (S701), par un terminal mobile, une information pertinente, l'information pertinente comprenant une information d'environnement concernant le terminal mobile ;
déterminer (S703), par le terminal mobile en fonction de l'information pertinente, une quantité d'antennes qu'il convient de laisser activées ; et
commander (S704), par le terminal mobile, une quantité d'antennes activées du terminal mobile comme étant la quantité d'antennes correspondant à l'information pertinente,
le procédé, avant la détermination (S703), par le terminal mobile en fonction de l'information pertinente, d'une quantité d'antennes qu'il convient de laisser activées, comprenant également l'étape consistant à :
comparer (S702), par le terminal mobile, l'information pertinente à une condition prédéterminée, et déterminer si l'information pertinente satisfait la condition prédéterminée,
dans lequel l'information d'environnement est un utilisateur situé dans le rayonnement du terminal mobile, la condition prédéterminée étant une information biologique prédéterminée ;
le procédé de commande comprenant également l'étape consistant à :
comparer, par le terminal mobile, une caractéristique d'utilisateur envoyée par un dispositif tiers à l'information biologique prédéterminée, et déterminer si la caractéristique d'utilisateur envoyée par le dispositif tiers correspond à l'information biologique prédéterminée ; ou
analyser, par le terminal mobile, une instruction d'opération entrée par l'utilisateur ou une information d'utilisateur acquise, pour acquérir une caractéristique d'utilisateur ; et
comparer, par le terminal mobile, la caractéristique d'utilisateur à l'information biologique prédéterminée, et déterminer si la caractéristique d'utilisateur correspond à l'information biologique prédéterminée, l'information d'utilisateur étant entrée par l'utilisateur ou envoyée par un dispositif tiers ; et
si la caractéristique d'utilisateur correspond à l'information biologique prédéterminée, déterminer, par le terminal en fonction de l'information pertinente, la quantité d'antennes qu'il convient de laisser activées, et
dans lequel la caractéristique d'utilisateur indique si l'utilisateur est un adulte, une personne âgée, une femme enceinte ou un enfant.

2. Terminal mobile configuré pour effectuer le procédé selon la revendication 1.
